Europäisches Patentamt

**European Patent Office**

**Office européen des brevets**

(19)

(11) Publication number: **0 101 144**
**A2**

(12) # EUROPEAN PATENT APPLICATION

(21) Application number: **83301106.7**

(22) Date of filing: **02.03.83**

(51) Int. Cl.³: **B 65 H 31/30**

(30) Priority: **06.08.82 US 405665**

(43) Date of publication of application:
**22.02.84 Bulletin 84/8**

(84) Designated Contracting States:
**CH DE FR GB IT LI SE**

(71) Applicant: **CURT G. JOA, INC.**
**Crocker Avenue**
**Sheboygan Falls Wisconsin 53085(US)**

(72) Inventor: **Hirsch, John L.**
**542 Lynwood Drive**
**Sheboygan Falls Wisconsin 53085(US)**

(72) Inventor: **Burgard, James F.**
**Highway 32**
**Sheboygan Falls Wisconsin 53085(US)**

(74) Representative: **Fisher, Bernard et al,**
**Raworth, Moss & Cook 36 Sydenham Road**
**Croydon Surrey CR0 2EF(GB)**

(54) **Stop action diaper stacker.**

(57) Conveyor chains, from which diaper carrying paddles extend, translate at constant velocity on a pivotable accumulator frame. A cam turning at uniform angular velocity acts on a follower that pivots the frame cyclically between upper and lower limits. During one phase of cam rotation the frame and conveyor chains are caused to rise at a constant velocity which equals the downward translational velocity of the chains so the net velocity of the chain and paddles is substantially zero. During this stop action phase a power driven stripper bar pushes a stack of diapers from the paddles.

EP 0 101 144 A2

./...

Fig. 1

## STOP ACTION DIAPER STACKER

### Background of the Invention

This invention pertains to apparatus for accumulating articles, particularly pliable articles such as pads, in stacks which each contain the same number of articles. The apparatus is especially useful for accumulating stacks of folded disposable diapers and will be described with that use in view.

Disposable diapers come off of a high-speed production line in a folded condition and in series at which time they are fed to a stacker prior to packaging them. The more rapidly diapers can be assembled in groups and removed from the stacker the more rapidly they can be fed into it which means that the production line speed need not be reduced to prevent overriding or overflowing the stacker.

A well known stacker or diaper accumulator comprises a two-sided frame disposed in a fixed vertical attitude. Power-driven conveyor chains translate longitudinally in a closed loop and in parallel with each other about an essentially triangular path between the sides of the frame. A series of paddles are fastened to the respective conveyor chains and extend away from it so diapers can be inserted between them. Next to a section of the conveyor chains that is moving downwardly, a cyclically operated closely timed stripper bar moves transversely to the path of the descending diapers to push off the specific number of them that makes up a stack. The stripper bar must make abrupt changes in direction since it goes out to sweep the diapers off of the paddles, drops down, comes back in and goes up to get rearwardly of the paddles that have been meanwhile moving downwardly on the conveyor chains for accumulating the next stack. It should be evident that the time window in which the stripper must execute an operating cycle is short which means that the stripper must operate at very high speed if the diaper infeed rate is not to be slowed down. The higher the operating speed of the stripper the greater the mechanical shock and the higher the noise level. Moreover, diapers and the like that are fabricated at high speed typically contain wads of fluff or other fluid-absorbent pads which results in diaper stacks having a tendency to be unstable. Hence, if they acquire substantial inertia as is the case where the stripper bar must move them at extremely high speed, they have a greater tendency to misalign in the stacks.

## Summary of the Invention

An object of the present invention is to provide for a longer time window or interval for the stack stripper to act but not at the expense of having to reduce the diaper infeed rate to the stacker. Stated in another way, an object of the invention is to provide for the stripper operating at a lower speed than was heretofore permissible.

In general terms, the new diaper stack accumulator has paddle-carrying flexible members or laterally spaced apart conveyor chains running in parallel on a frame in a closed loop. A section of the laterally spaced apart conveyor chains moves downwardly while carrying diapers on the successive paddles. The frame is mounted on a fixed support for pivoting about a horizontal axis in a vertical plane. A cam follower is mounted to the frame. A power-driven rotatable cam acts on the follower and rotates one revolution per stack in the described embodiment. The cam profile has several contiguous angular sectors, one of which pivots the frame upwardly for a definite interval at a constant velocity which is equal to but oppositely directed to the velocity of the descending chain such that movement of the paddles during this interval is stopped relative to any fixed point. During this stop-motion interval, a stripper bar shifts transversely across the path of the relatively stationary accumulated diapers and sweeps them off of the paddles and onto a table at the output station. The stripper bar then retracts to its initial position after having executed its outward, downward, backward and upward motions.

Another feature of the apparatus is that the paddles, and hence the diapers, are angulated upwardly to the outside at the moment the stripper bar removes the accumulated stack to assure that the lowermost diaper in the stack will clear the top of the table to which the stack is transferred at the output station.

Further objects, advantages and features of the invention will become apparent in the more detailed description of a preferred embodiment of the apparatus which will now be set forth in reference to the drawings.

Description of the Drawings

FIGURE 1 is a side elevation view of the new diaper accumulator or stacker;

FIGURE 2 is a partial front elevation view of the stacker taken on a line corresponding with 2-2 in FIGURE 1;

FIGURE 3 is a diagrammatic partial side view of the output end of the machine showing the relationship of the parts when the accumulator frame is just beginning to rise at constant velocity;

FIGURE 4 shows the accumulator frame while it is still rising at constant velocity and at which time a stripper bar is pushing the predetermined quantity of diapers comprising a stack from the conveyor paddles;

FIGURE 5 shows the accumulator frame at the end of the constant rise velocity interval at which time the stripper bar is advanced to its outward limit;

FIGURE 6 shows the accumulator frame after it has begun to descend and let diapers come down relative to the stripper bar while the stripper bar is being retracted; and

FIGURE 7 is a diagram of the cam that pivots or oscillates the accumulator frame cyclically.

Description of a Preferred Embodiment

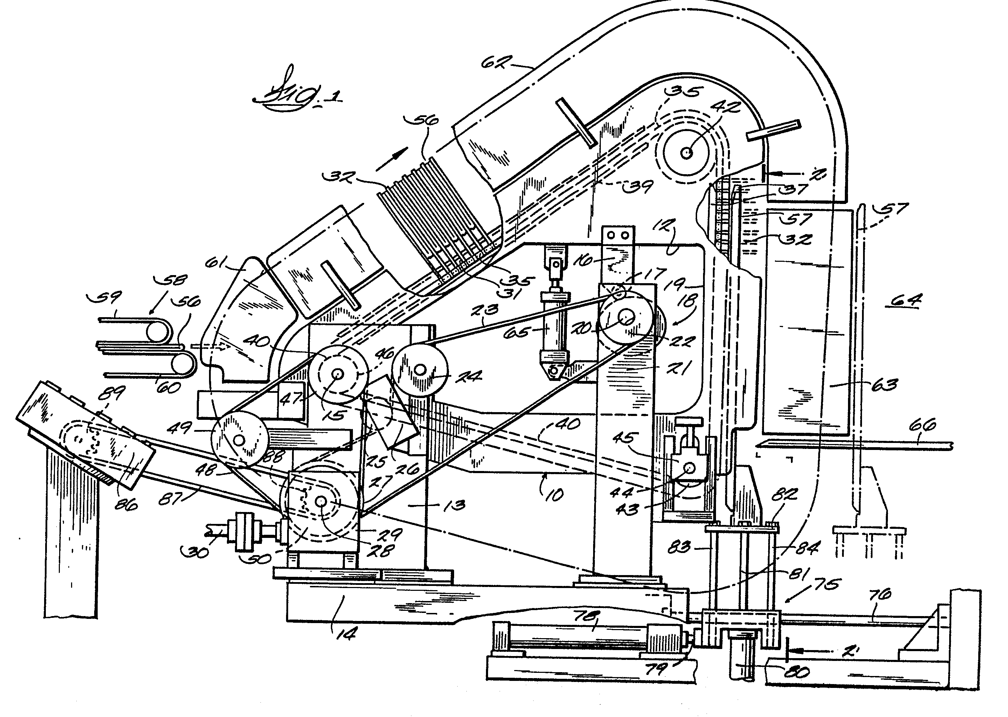

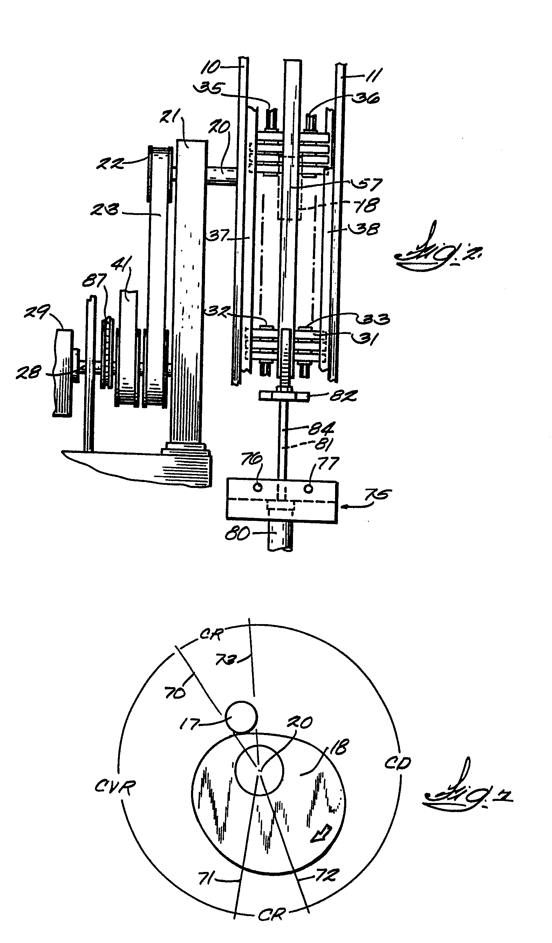

Referring to FIGURE 1, the accumulator or stacker comprises a frame which is composed of two generally triangular and laterally spaced apart flat members. One of the flat members marked 10 is visible in FIGURE 1 and the other which is behind it is marked 11 is visible in FIGURE 2. Metal spacer blocks which hold the flat members 10 and 11 in parallel spaced relationship have been omitted for the sake of simplifying the drawing. The frame members have aligned central windows or openings 12. There is an upstanding post 13 mounted to the base 14 of the machine. A laterally extending shaft 15 is journaled in the post in the left region of FIGURE 1. Frame members 10 and 11 are journaled for pivoting about the axis of shaft 15. Thus, the frame is equivalent to a pivoting arm or beam. A yoke or bracket 16 extends vertically from the accumulator frame in the region of its openings 12. A cam roller or follower 17 is journaled for rotation on bracket 16. The periphery of a cam 18 is in contact with follower 17. The cam coacts with follower 17 to reciprocate or oscillate the accumulator frame in a vertical direction about the axis of shaft 15. In other words, a vertically disposed section 19 of the frame is caused to generally move up and down within limits and in a slightly curved path in response to the rotationally driven cam 18 acting on the follower 17. A more detailed discussion of the cam profile and its functions will be given later.

Cam 18 is fastened to a shaft 20 that is journaled for rotation about a horizontal axis in a column 21 that is mounted to machine base 14. There is a toothed pulley 22 fastened to cam shaft 20. A toothed belt 23 drives the cam pulley rotationally. Belt 23 runs over an idler pulley 24 that is mounted on column 13 for rotation and under another pulley 25 which is movable on a bracket 26 for tightening the belt. Belt 23 also runs over a driving pulley 27 which is on a shaft 28 which extends from a gear box 29. The power input shaft to the gear box is marked 30. This shaft is driven from the main shaft of a diaper making machine, not shown, so the whole diaper production line operates in synchronism.

There are two laterally spaced apart flexible conveyor members, namely chains, which are arranged to translate longitudinally in closed triangular shaped loops on the accumulator frame. The foremost chain 35 is visible in FIGURE 1 and its counterpart 36 is also visible in FIGURE 2. The conveyor chains run on three pairs of axially spaced sprockets that are arranged in a triangular configuration. The uppermost pair of laterally spaced apart sprockets 41 are idler sprockets that are on a shaft 42. There is also a lowermost pair of laterally spaced apart idler sprockets 43 that run on a shaft 44 which is carried by a conventional chain tightener 45. The chains are translated longitudinally by a belt driven pair of sprockets 46 which are on frame pivot shaft 15 along with a toothed pulley 47. Power is transmitted to the pulley 47 which drives the pair of conveyor chains by means of a toothed belt 48 which passes over an idler pulley 49 and a power input pulley 50 that is on the output shaft 28 of the gear box 29. The conveyor chains 35 and 36, of course, translate around their triangular loop at constant linear velocity in any given machine.

As can be seen best in FIGURE 2, a series of bars 31 span across and are connected to conveyor chains 35 and 36. Opposite ends of the respective bars 31 extend into guide channels 37 and 38, thus permitting the bars 31 to translate with the conveyor chains. Note that the bars as shown in FIGURE 2 would translate vertically downward with the chains at the front of the machine. The bars 31 each have a pair of outwardly extending paddles 32 and 33 fastened to them. By way of example and not limitation, successive pairs of paddles 31, 32 are spaced apart in the direction of chain travel by about one inch to accommodate folded diapers 56 between them as is illustrated by a representative number of paddles 32, constituting one-half of each pair, near the top of FIGURE 1.

As shown in the FIGURE 1 side view and the FIGURE 2 front view of the accumulator, at the front there is an upright stripper bar 57 which is operable to push a group or stack of diapers off of paddle pairs, comprised of paddles 32 and 33, simultaneously. The stripper bar 57 is located in the space between the laterally spaced apart pairs of paddles 32 and 33 and outside of the bars 31 so the stripper bar 57 can move without interference from its home position where it is depicted in solid lines to its outermost position where it is depicted in phantom lines in FIGURE 1.

In addition to the vertical guides 37 and 38 in which the cross bars 31 are guided as the conveyor chain moves downwardly as in FIGURE 2, there are, as can be seen in FIGURE 1, a sloped pair of guide channels such as the one marked 39 at the top of the accumulator and another pair of lower guides 40 which prevent the conveyor chain from sagging.

Diapers that are to be accumulated in stacks are fed in at the infeed station 58 in the left region of FIGURE 1. Diapers 56 are conveyed serially between a pair of conveyor belts 59 and 60 from which they are ejected for being inserted between paddles that are transported by conveyor chains 35 and 36. The belt infeed conveyor 58 runs synchronously with the accumulator so that a diaper is inserted between each pair of paddles and so that stacks containing a uniform quantity of diapers will be formed for removal at the output station 64 of the machine. There are guard plates such as those marked 61, 62 and 63 that define a protective channel in which the conveyor chains and paddles translate.

To summarize the structure described thus far, when the accumulator is operating, conveyor chains 35 and 36 are translating at constant velocity. At the same time, cam 18 is rotating and causing accumulator frame 10 to pivot up and down cyclically about the axis of shaft 15. A section of the paddle carrying conveyor chains at the stack output station 64 will be moving generally downwardly while diapers still on the paddles are now arranged one above the other for forming a stack which is to be removed from the accumulator conveyor without interfering with or requiring retardation of the conveyor.

It may be noted that good contact between cam 18 and cam follower 17 is maintained by interposing a pneumatic cylinder 65 between them. It should be noted too that cam 18 is driven at constant angular velocity although it is so profiled that the upward and downward velocity of the accumulator frame 10 will vary over the course of a pivotal cycle.

An enlargement of a cam 18 used in an actual embodiment is depicted in FIGURE 7 where it is shown in contact with follower roller 17. The cam has a constant velocity rise sector (CVR) between the radii 70 and 71 that project from the center of cam shaft 20. When the periphery of the cam in the CVR sector is rotating against the follower, the accumulator frame 10, particularly, the vertical section adjacent output station 64 is rising at constant velocity. The upward velocity of the accumulator frame during the CVR interval just matches the generally downward velocity of the conveyor chains and paddles so that during the CVR interval the paddles maintain a constant elevation or remain fixed relative to a fixed point on the base of the machine for example. Thus, even though the conveyor chains maintain constant velocity with respect to the accumulator frame during the CVR interval, the motion or action of the paddles is stopped relative to the stripper bar 57 which is stationary at the beginning of the CVR interval and in the position for sweeping a stack of diapers from the relatively stationary paddles wherein it is shown in solid lines in FIGURE 1.

After the cam has rotated through the CVR sector of its profile it next reaches a sector between radii 71 and 72 which, in an actual embodiment, constitutes an angular sector that produces a cycloidal rise (CR). The next angular sector that goes into contact with the follower is for letting the accumulator arm pivot to descend to its lowermost position at the desired rate. This sector is defined between radii 72 and 73 and is designated the cycloidal descent (CD) sector. The final sector on which the periphery of the cam presently resides in FIGURE 7 is another cycloidal rise (CR) sector which is defined between the radii 70 and 73. It is at the time that cam follower 17 is on the CVR cam sector or during the stop action interval that the stripper bar 57 is actuated to traverse between paddles for sweeping a stack of diapers off of the conveyor whereupon it reaches its outermost phantom line position in FIGURE 1. This is followed by the stripper bar 57 being caused to move downwardly from its phantom line position in FIGURE 1 to get under the downcoming next stack of diapers, and then inwardly and upwardly again to its home or starting position as shown in solid lines in FIGURE 1.

Referring to FIGURES 1 and 2, stripper bar 57 is essentially mounted to a carriage 75 which is movable horizontally on a pair of fixed guide rods 76 and 77. Carriage 75 is shiftable from an innermost position wherein it is shown in FIGURE 1 to an outermost position on the end of guide rod 76 by means of a pneumatic cylinder 78 whose piston rod 79 is coupled to the carriage. It will be evident that when piston rod 79 is extended, stripper bar 57 will shift from its solid line position in FIGURE 1 to its phantom line position. Reversible air pressure in cylinder 78 will retract the stripper bar inwardly. The stripper bar can also execute vertical movements. Another pneumatic cylinder 80 is used for this purpose. Cylinder 80 is fastened to and carried on carriage 75. The piston rod 81 of cylinder 80 carries a bracket 82. There are also two guide rods 83 and 84 which extend through the carriage between horizontal rods 76 and 77. Pneumatic cylinder 80 is operable to lower and raise stripper bar 57. A stack stripping cycle starts with the pusher bar being in its retracted or home position as shown in solid lines in FIGURE 1. At the proper time, that is, when motion is stopped during the constant velocity rise part of the cam cycle, pressure is applied to cylinder 78 for projecting the carriage and stripper bar 57 outwardly to sweep off a stack of diapers. When the stripper bar reaches its outermost position, vertical drive cylinder 80 is pressurized to cause the bar 57 to move downwardly. Near the bottom of the downward stroke, air pressure is applied to cylinder 78 to retract the bar 57 to alignment with its home position and then vertical cylinder 80 is appropriately pressurized for lifting the stripper bar 57 to its initial elevation.

The solenoid valves and hoses for cycling work cylinders 78 and 80 are not shown in the drawings. Means for controlling them synchronously are shown in part. The cycling means includes a commercially available controller which is represented by the box marked 86 in FIGURE 1. Although the mechanisms in the controller are not shown, the controller has some cam shafts that operate switches in a proper timing sequence for operating the solenoid valves that control pressure to cylinders 78 and 80. The controller is driven synchronously with the accumulator and the rest of the diaper making machinery, not shown, by means of a timing chain 87 that is driven by a sprocket 88 on the shaft 28 of the gear box. The timing chain drives the controller by means of sprocket 89.

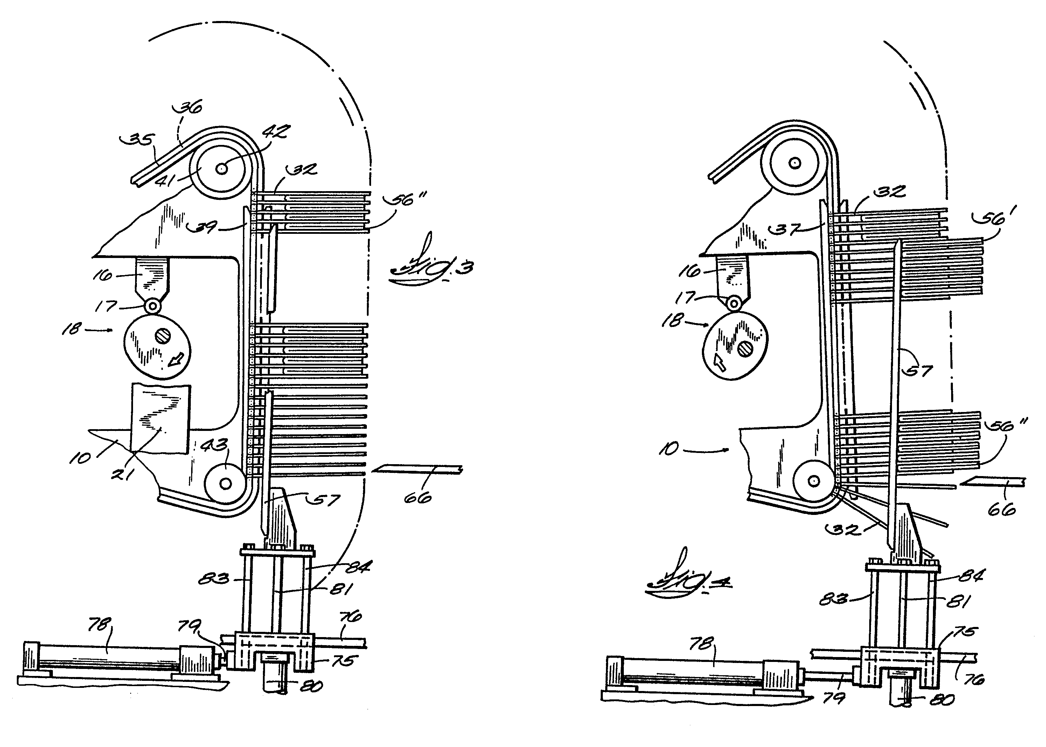

Some additional features and a more detailed description of an operating cycle of the accumulator will now be discussed in reference to FIGURES 3-6.

In FIGURE 3, assume that the front nominally vertical section of the accumulator frame 10 is presently pivoted to its lowest elevation or to its clockwise limit. Cam 18 is rotating clockwise and the constant velocity rise sector of its profile is just beginning to pass follower 17 to start raising the frame 10 and, hence, the vertical stretch of the chains and paddles at constant velocity. The conveyor paddles are moving downwardly relative to the accumulator frame but are going into their constant elevation phase relative to the base of the machine. The uppermost diaper in the stack that is to be formed is marked 56'. The lowermost diaper in the stack is marked 56". The top diaper 56' is within the range of stripper bar 57. The stripper bar is still inactivated.

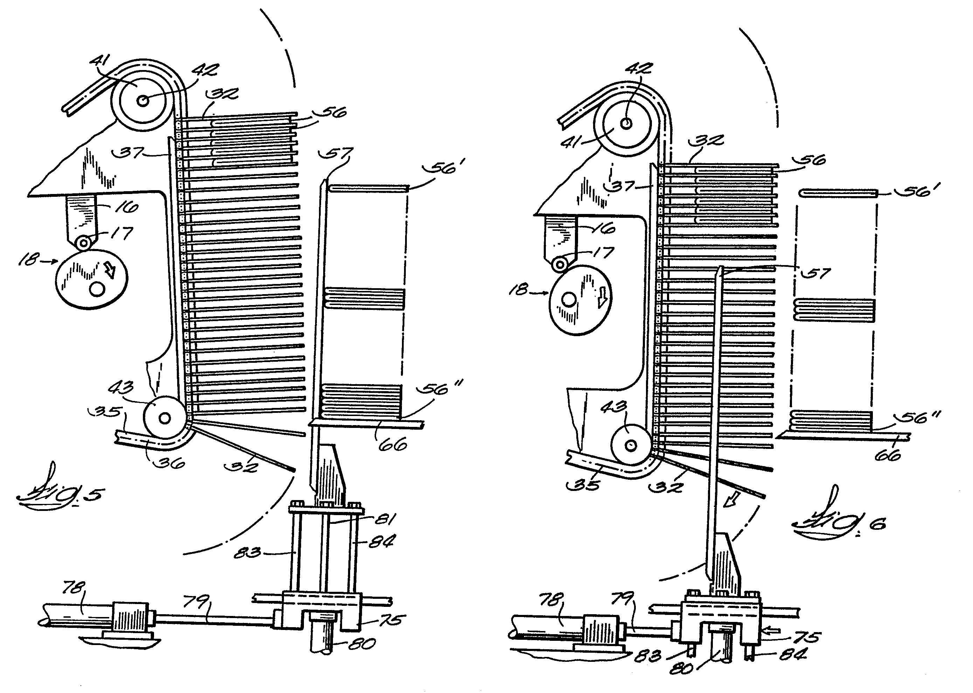

In FIGURE 4, cam 18 has rotated further onto its constant velocity sector. At this moment, air cylinder 78 is pressurized for driving horizontal carriage 75 outwardly or away from the conveyor chains. This results in the vertical stripper bar 57 sweeping the accumulated stack of diapers off the paddles to the right so the diaper stack is deposited on table 66. The diaper stacks are pushed away by a double-acting shuttle device, not shown, of a type that is well known in the art. Note in FIGURE 4 that the stripper bar 57 begins its outward movement at a time when the accumulator frame 10 has been raised sufficiently for the laterally spaced apart rows 32 and 33 of paddles to be angulated upwardly in the outward direction which assures that the leading edge of lowermost diaper 56" will clear the output station table top 66.

In FIGURE 5, the stripper bar 57 has moved out of the space between the rows of paddles and has reached its final position at which it has deposited the diaper stack on table top 66. Cam 18 is nearing the end of its constant velocity sector. At this time, although it is not shown in FIGURE 5, air cylinder 80 is activated to pull stripper bar 57 downwardly. Almost simultaneously, horizontal cylinder 78 is activated for beginning to retract stripper bar 57 inwardly to its home position between the laterally spaced apart rows of paddles on the conveyor chains and on the inside of the folded edges of the diapers on the paddles.

In FIGURE 6, cam 18 has rotated to where its large cycloidal descent, CD, sector is in contact with follower 17.

The stripper bar 57 is still moving downwardly and inwardly. Thus, the stripper bar leads the incoming diapers 56 which will form the next stack and clearance is provided between the leading diaper and the stripper bar so they will not collide. As shown in FIGURE 6, the leading diaper for the new stack is below the level of the uppermost diaper 56' in the previously accumulated stack by this time. The new group of diapers is descending at a velocity equal to the sum of the downward velocity of the paddles on the chain and the downward velocity of the vertical section of the pivoting accumulator frame 10. The stripper bar 57 continues on from its FIGURE 6 position back to its home or initial position behind the incoming stack of diapers which, at this time, have begun to pass the bar 57. Almost simultaneously, vertical acting air cylinder 80 is activated to restore the stripper bar 57 to its uppermost position from which it started for a stripping cycle as shown in FIGURE 3.

The two small cycloidal rise, CR, sectors on the cam in FIGURE 7 were inserted between the constant velocity rise, CVR, sectors and the constant descent, CD, sector to achieve a smooth transition of the motion between the rise and descent phases of the cam. Cam profiles other than cycloidal might fulfill the purpose.

It should be evident from the description thus far that there is a relationship between the angular size of the constant velocity rise section of the cam and the speed at which the stripper bar must be compelled to act. The rate at which the paddles are allowed to descend concurrently with the accumulator frame has a relationship to the number of diapers that can be accumulated in a stack. In the illustrated embodiment the cam makes one revolution per stack. In any event, to obtain the stop motion effect in accordance with the invention, the CVR sector of the cam profile is made long enough to let the stripper bar execute its rectangular motion and get back to home position before incoming diapers reach it. Means other than air cylinders

78 and 79 could be used for actuating stripper bar 57. Any mechanism, not shown, might be used which drives the stripper bar through a rectangular route could be used provided it is synchronized properly with the velocity of the conveyor.

Although a preferred embodiment of the new accumulator has been described in detail, such description is intended to be illustrative rather than limiting, for the concepts of the invention may be variously embodied and is to be limited only be interpretation of the claims which follow.

CLAIMS

1. Apparatus for accumulating pads in stacks comprising:

a stationary support,

a frame mounted on said support for pivoting about a horizontal axis,

flexible conveyor means supported on the frame and means for translating said conveyor means longitudinally at constant velocity in a closed loop at least a section of which moves nominally downwardly and is spaced from said axis,

a series of laterally spaced apart pairs of paddle members mounted to said conveyor means and extending outwardly from the loop for supporting pads being conveyed from an input station to a stack output station adjacent said downwardly moving section,

a cam follower mounted to said frame in spaced relationship with said pivot axis,

a cam and means for rotating the cam at constant angular velocity, said cam acting on the follower to pivot the frame on its axis and thereby cause said frame to descend and rise cyclically,

said cam having a plurality of contiguous sectors for acting on said follower in succession, one of said sectors designated a constant velocity rise sector causing said frame to rise for an interval at constant velocity corresponding to the velocity at which said paddles are moving downwardly such that at least during said constant velocity interval said paddles in said downwardly moving section remain at a substantially constant elevation, said cam having at least another sector for causing said frame and said conveyor means and the paddles thereon to move downwardly together,

a vertically extending stripper bar for pushing a number of pads comprising a stack off of the paddles on said downwardly moving section of the conveyor means at said output station, and

means operable synchronously with said cam for moving said stripper bar cyclically in the space between paddles along said downwardly moving section from a retracted position inside of the path of travel of the pads to an advanced position outside of said path for pushing the stack of pads from the paddles during said constant velocity interval and then downwardly, inwardly and upwardly to restore said bar to retracted position.

2. The apparatus as in claim 1 wherein said flexible conveyor means are comprised of chains and there is a shaft journaled for rotation in said stationary support and the shaft has said horizontal axis about which the frame pivots,

spaced apart sprockets on said shaft drivingly engaged with said chains, and a pulley on said shaft,

a drive shaft having at least two pulleys thereon,

power input means for rotating the drive shaft,

belt means coupling one of the pulleys on the drive shaft to the pulley on the shaft about which the said frame pivots,

a cam shaft supporting said cam for rotating and a pulley on said cam shaft,

belt means coupling the other of the pulleys on the drive shaft to the pulley on the cam shaft, whereby the cam will be driven rotationally in a fixed phase relationship with pivotal movements of the frame.

3. The apparatus in any of claims 1 or 2 wherein movement of said stripper bar for stripping the stack from said paddles is initiated after said frame has pivoted and risen enough during said constant velocity interval for said paddles to be inclined upwardly away from said chain.

4. The apparatus as in any of claims 1 or 2 wherein, in addition to said constant velocity rise sector said cam has a major sector that allows said frame to descend after said constant velocity interval at a velocity that is higher than the velocity during said interval.

5. The apparatus as in claim 1 wherein said cam is further characterized by having a major portion of its profile constituting said constant velocity (CVR) sector and another major portion of its profile constituting a cycloidal descent (CD) sector during which said frame is permitted to move downward at a velocity that is higher than said constant velocity, and two cycloidal rise (CR) sectors respectively interposed between the CVR and CD sectors for effecting smooth velocity changes between the CVR and CD sectors.

*Fig. 1*

Fig. 2

Fig. 3

214

0101144

_Fig. 3_

_Fig. 4_

0101144

Fig. 5

Fig. 6